# EUROPEAN PATENT SPECIFICATION

(11) **EP 1 750 103 B1**
(45) Date of publication and mention of the grant of the patent: **26.10.2011**
(21) Application number: 06253702.2
(22) Date of filing: 14.07.2006
(51) Int. Cl.: G01F 11/28, G01F 11/12, B01F 5/10, B01F 11/00, B01F 15/00

(54) **Fluid dispensing apparatus, and related method**
Vorrichtung zur Abgabe von Fluid, und darauf bezogenes Verfahren
Dispositif pour délivrer d'un fluide, et procédé associé

(30) Priority: 26.07.2005 US 189358
(43) Date of publication of application: 07.02.2007
(60) Divisional application: 09151128.7
(73) Proprietor: MILLIPORE CORPORATION, Billerica Massachusetts 01821 (US)
(72) Inventor: Belongia, Brett M., North Andover Massachussetts 01845 (US); Saunders, Robert C., North Andover Massachusetts 01845 (US)
(74) Representative: Greenwood, John David

(56) References cited:
- WO-A-82/03797
- WO-A-03/002590
- DE-A1- 1 472 745
- DE-C- 670 057
- GB-A- 731 815
- GB-A- 891 334
- NL-A- 7 901 305
- US-A- 1 947 851
- US-A- 4 276 270
- US-A- 5 004 571
- US-A- 6 027 240
- US-A1- 2003 198 125
- US-A1- 2005 146 982
- [VAKUMIX RÜHR-UND HOMOGENISIERUNGSTECHNIK AG] N. N.: "Fortschrittliche Herstellungsprozesse für halbfeste Produkte" INTERNET CITATION, [Online] 2003, pages 1-4, XP002382559 Retrieved from the Internet: URL:http://www.industrie-service.de/_C1256 BC100329640.nsf/previewFS?OpenP age&A&UIDSorted/39EC8AE551A91AA0C1256E8600 2E368D> [retrieved on 2006-05-24]
- [WIKIPEDIA] N. N.: "Peristaltic pump"[Online] pages 1-2, XP002451276 Retrieved from the Internet: URL:http://en.wikipedia.org/wiki/Peristalt ic_pump> [retrieved on 2007-09-18]

## Description

### BACKGROUND OF THE INVENTION

There are various types of dispensing apparatuses for filling parenteral and opthalmic products into vials and containers. One such type is positive displacement fillers. These devices employ a cylinder and piston arrangement, which contacts and dispenses the fluid. Typically, fluid enters the cylinder as the piston is in its upward motion, which creates a vacuum into which the fluid enters through an inlet port. The downward motion of the piston expels the fluid through an outlet port. The process can then be repeated. Other embodiments of positive displacement fillers also exist, such as those using rotary pumps.

While these fillers are popular due to their speed and accuracy, their application is limited, especially in the pharmaceutical field. These devices are very difficult to clean, and typically must be disassembled to be sterilized. Also, since the device actually contacts the fluid, contamination is a constant risk.

Another type of dispensing, apparatus is the time/pressure filler. These typically include a fluid chamber that is held under constant pressure. Fluid is dispensed through a discharge line, which is controlled by a pinch type valve. The valve is opened for a precise amount of time to dispense fluid. Since the pressure is held constant, and the time interval is constant, the amount of fluid dispensed should also be constant. However, due to variances in the equipment and deformation of the discharge tube over time, these systems are less accurate than required for many applications.

A third type of dispensing apparatus is the volumetric dispensing apparatus, as shown in U.S. Patents 5,680,960, 5,480,063, and Publication No. 2005-0029301. These devices measure and dispense a predetermined volume of fluid. These systems are highly accurate and avoid problems of contamination common with positive displacement apparatus, since there are no moving parts in contact with the fluid.

The above mentioned apparatus can all be used to dispense single-phase fluids but all of the apparatus described suffer from one or more significant drawbacks when dispensing solids dispersed in liquid (suspensions) or droplets of one liquid suspended in another liquid (emulsions). Suspension products, such as vaccines or steroid products may settle when not properly agitated. In the case of emulsions, the two liquids will form droplets when they are agitated but when agitation stops, the droplets may separate into two separate layers. Either of these cases will result in poor content uniformity from one vial to the next during the final dispensing of the product.

In addition, it can be difficult to clean the process equipment that has contained suspensions or emulsions, resulting in labor intensive cleaning procedures and significant downtime to change from one batch to another. Since the final drug product must remain sterile, rigorous aseptic processes must be adhered to in the reassembly of the dispensing apparatus.

It is therefore an object of the present invention to provide a dispensing apparatus that has provision for the mixing of suspension and emulsion products, while maintaining the integrity of the system so that sterility is not negatively impacted. It is also an objective of this invention to minimize the amount of time spent cleaning the delivery system therefore minimizing the amount of downtime required.

EP-A-0454986 discloses a gas-liquid mixing vessel which utilizes an axial flow, down-pumping impeller in a draft tube to create vortex development so as to draw gas from the overhead in a body of recirculating liquid. A surge tank is used to accommodate volume changes in the vessel, and a liquid level control feature, in which the gas phase pressures in the mixing vessel and the surge tank are adjusted, is used to maintain the liquid level in the mixing vessel at a desired level for proper vortex development.

US-A-6027240 discloses an improved apparatus and process for the dilution and delivery of both high-purity chemicals as well as slurry chemicals from one or more bulk sources to an end-user. The system utilizes two or more metered vessels which are connected to bulk chemical sources via intake lines. Each metered vessel contains an adjustable, swingable angle pipe, which drains any excess chemical by gravity flow from the metered vessel so as to adjust the chemical amount to a predetermined desired level. As the chemicals exit the angle pipes, sensors located at the end of the angle pipes sense the chemical being discharged and trigger the feed pump and valve to shut off, whereby the excess chemicals will continue to drain out until the chemical levels reach the same level as the vent port of the pipe attached to the metered vessels. The chemicals are drawn into the metered vessels from the bulk sources via a feed pump or pressure mechanism. The chemicals are then motivated through dispense lines to the pressure tank vessel for mixing and subsequently being delivered to a storage vessel which, in the case of CMP, may be replaced by a plurality of small diameter vessels to reduce slurry particle agglomeration.

GB-A-731815 discloses a system in which partitions are arranged in vessels having perforations which receive pairs of conduits terminating in opposed jets. Upstream of each partition is a manifold for the supply of fresh olefin feed material. The emulsion, and the fresh feed materials entering through the manifolds, pass upwardly through the perforated plates into the conduits and pass out of the jets 30 as opposed streams into the liquid pool constituted by the emulsion in the zones above the partitions whereby the reaction materials are contacted. The system includes means for recycling some of the emulsion discharged from the last vessel of the series and for recycling some of the acid obtained from a separator at the end of the series of vessels, from which separator hydrocarbon materials containing the desired alkylation products are passed on to fractionation means.

US-A-4276270 discloses a multi-stage, multi-vessel phosphoric acid production system where a first reaction vessel contains a first slurry comprising calcium sulfate hemihydrate, monocalcium phosphate and phosphoric acid and a second reaction vessel contains a second slurry comprising calcium sulfate hemihydrate, sulfuric acid and phosphoric acid, in which the reaction slurry undergoes intra- and inter-vessel circulation, preferably through a draft tube, an improved start-up procedure involves filling the system with heated phosphoric acid having a P205 analysis in the range of about 28 to about 38% (e.g. 31 %), then feeding phosphate rock to the system, preferably in a separate reaction vessel, while phosphoric acid is recycled from a fourth, filter feed vessel, until the solids content in said slurry is in the range of 25-35% (e.g.; about 30%) while the sulfate content in the first vessel is maintained at a negative level (e.g. excess calcium ion) and at a positive level in the second, crystallizer vessel.

US-A-5004571 discloses a gas-liquid mixing vessel which utilizes an axial flow, down-pumping impeller in a draft tube to create vortex development so as to draw gas from the overhead in a body of recirculating liquid. A surge tank is used to accommodate volume changes in the vessel, and a liquid level control feature, in which the gas phase pressures in the mixing vessel and the surge tank are adjusted, is used to maintain the liquid level in the mixing vessel at a desired level for proper vortex development.

The present invention is a fluid dispensing apparatus and a method of minimizing in a reservoir the separation of a two-phase fluid as claimed in claims 1 and 6, respectively. Optional features are recited in the dependent claims.

According to the present invention, peristaltic pumps, or other non-invasive pumping apparatus, are positioned upstream and downstream of the fluid reservoir, in fluid communication with and forming a single loop with a well-mixed fluid source. Circulation between the fluid source and the reservoir is maintained so as to ensure a constant liquid level in the reservoir.

A single-use format of reservoir allows for easy installation, pre-sterilization, and easy clean-up which will result in minimal downtime, significant cleaning chemical cost reduction, and greater ensured sterility. The shape and material of the reservoir are critical in maintaining product uniformity.

### BRIEF DESCRIPTION OF THE DRAWINGS

Figure 1 is a schematic diagram showing a dispense cartridge useful with the present invention;
Figure 2 is a schematic diagram showing an embodiment of the dispense system in accordance with the present invention; and
Figure 3 is a schematic diagram showing a reservoir useful with the present invention.

### DETAILED DESCRIPTION OF THE INVENTION

The dispense system described here consists of a single-use dispense cartridge and a hardware component onto which the dispense cartridge can be installed. The hardware system is described in the prior art (U.S. Patents 5,680,960 and 5,480,063).

Preferably the fluid reservoir section of the dispense cartridge is a pliable or flexible chamber or bladder, which expands and contracts to maintain a constant internal pressure. Disposable bag-like enclosures are particularly suitable. The tubing section of the dispense cartridge consists of flexible tubing such as silicone, polyethylene, or other elastomer or polymer based tubing attached together with plastic connectors made of materials such as polyethylene, polypropylene, or poly-fluorocarbons.

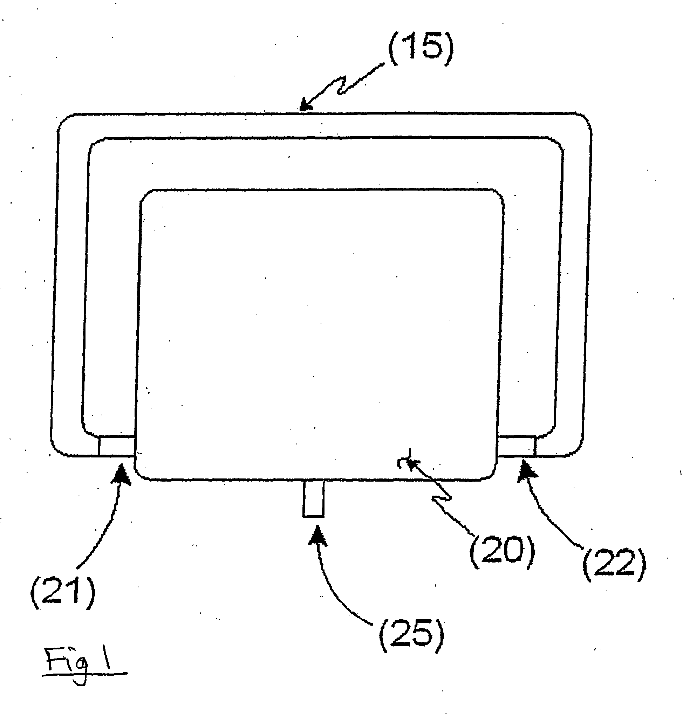

Figure 1 shows one arrangement of the dispense cartridge. An inlet (21) and outlet (22) port on the reservoir (20) are connected with a tubing loop (15). A port (25) on the bottom of the reservoir (20) is provided to allow liquid to move to the tubing assembly used to deliver the product to its final containers (not shown).

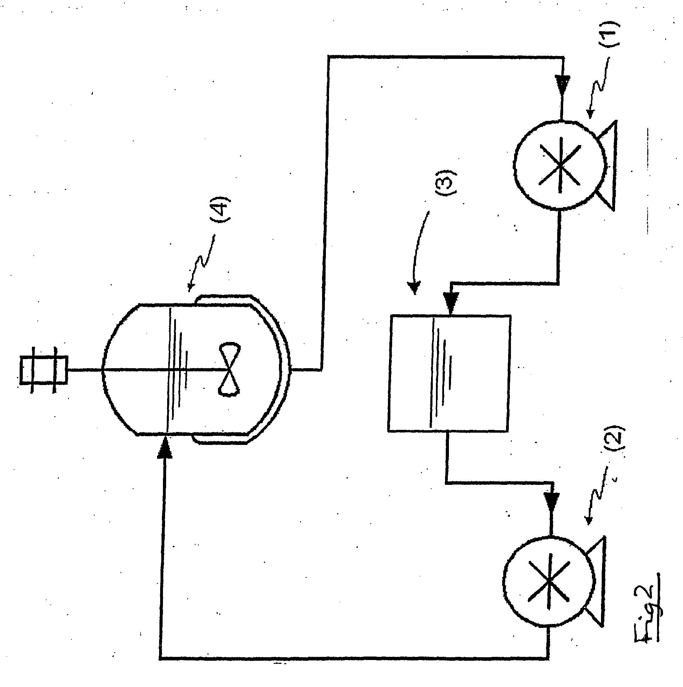

Figure 2 shows a single-loop dispensing system in accordance with the present invention. The system includes a feed pump (1) in fluid communication with a well mixed, bulk fluid supply source (4) and with the inlet or fill port of a fluid reservoir of the dispense cartridge (3), and a draw pump (2) in fluid communication with an outlet of reservoir of the dispense cartridge (3) and the feed to the well mixed bulk fluid supply source (4). Configuring the feed pump (1) and draw pump (2) in this way isolates the dispense cartridge (3) from the weight or pressure of the fluid column in the re-circulation line. Any type of non-invasive pumping apparatus can be used, but peristaltic pumps are particularly advantageous for pharmaceutical applications, because the fluid does not contact any components of the pump and seals and valves are not necessary.

A level sensor (part of the hardware system - not shown) such as an optical sensor or capacitance sensor can be used to monitor the fluid level in the reservoir of the dispense cartridge (3), and the pump speeds may be controlled thereby to maintain a consistent fluid level. Alternatively, a level switch can be used, in which case the pumps may be controlled in an on/off fashion. For example, one pump may be on continuously but slower than the other pump, which is on intermittently. Regardless of the relative operation of the pumps, it is important that neither pump be off for a time sufficient to allow enough of the solids in the suspension or emulsion to separate, such that the product becomes out of specification with respect to the dispersed-phase content (i.e., the "maximum separation time").

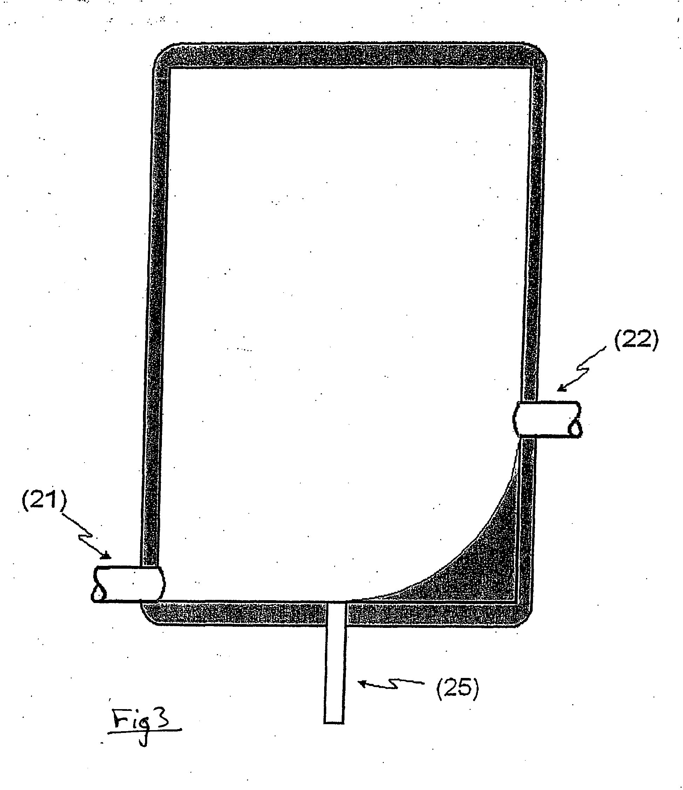

Figure 3 shows a preferred embodiment of the reservoir (20) section of the dispense cartridge. The preferred embodiment is designed to maximize the fluid motion in the reservoir (20) and minimize any potential stagnation zones. This embodiment shows the inlet (21) and outlet (22) ports of the reservoir (20) located on opposite sides of the reservoir (20). A port (25) on the bottom of the reservoir (20) allows fluid to move to the tubing assembly used to deliver the product to its final containers (not shown).

## Claims

1. A fluid dispensing apparatus for dispensing a predetermined volume of fluid, comprising:
a reservoir (3);
a fluid source (4) comprising a two-phase fluid;
a first pump (1) in fluid communication with said fluid source (4) and said reservoir (3) and arranged to pump said two-phase fluid into said reservoir (3);
a second pump (2) in fluid communication with said reservoir (3) and said fluid source (4) and arranged to pump said two-phase fluid from said reservoir (3);
a fluid level determining device arranged to determine the fluid level in said reservoir (3); and
a controller responsive to said fluid level determining device for controlling the speed of said first and second pumps (1, 2) based upon the fluid level in said reservoir (3) and arranged so as to maintain circulation between said fluid source (4) and said reservoir (3) in response to said determined fluid level such that a constant fluid level in said reservoir (3) is ensured and such that said two-phase fluid remains well-mixed.

2. The fluid dispensing system of claim 1, wherein said first and second pumps (1, 2) are peristaltic pumps.

3. The fluid dispensing system of claim 1, and either:
a) wherein said fluid is a suspension, or
b) wherein said fluid is an emulsion.

4. The fluid dispensing system of claim 1, further comprising a dispense cartridge (3) which houses said reservoir.

5. A method of minimizing in a reservoir the separation of a two-phase fluid, comprising providing a supply source (4) of said fluid in fluid communication with said reservoir (3), pumping said fluid from said source (4) to said reservoir (3) with a first pump (1), pumping said fluid from said reservoir (3) to said source (4) with a second pump (2), determining the fluid level in said reservoir and, in response thereto, maintaining with said first and second pumps the circulation between said supply source (4) and said reservoir (3) such that a constant fluid level in said reservoir (3) is ensured and such that said two-phase fluid remains well-mixed.

6. The method of claim 5, and either:
a) wherein said fluid is a suspension; or
b) wherein said fluid is an emulsion.

## Patentansprüche

1. Vorrichtung zur Abgabe von Fluid zum Abgeben eines vorbestimmten Fluidvolumens, mit:
einem Reservoir (3),
einer Fluidquelle (4) mit einem Zweiphasenfluid,
einer ersten Pumpe (1) in Fluidverbindung mit der Fluidquelle (4) und dem Reservoir (3), die einrichtet ist, um das Zweiphasenfluid in das Reservoir (3) zu pumpen,
einer zweiten Pumpe (2) in Fluidverbindung mit dem Reservoir (3) und der Fluidquelle (4), die eingerichtet ist, um das Zweiphasenfluid von dem Reservoir (3) zu pumpen,
einer Vorrichtung zum Bestimmen eines Fluidniveaus, die einrichtet ist, um das Fluidniveau in dem Reservoir (3) zu bestimmen, und
einem Kontroller, der auf die Vorrichtung zum Bestimmen des Fluidniveaus anspricht, zum Steuern der Geschwindigkeit der ersten und zweiten Pumpen (1,2) basierend auf dem Fluidniveau in dem Reservoir (3), der so eingerichtet ist, daß er eine Zirkulation zwischen der Fluidquelle (4) und dem Reservoir (3) in Reaktion auf das bestimmte Fluidniveau so einhält, daß ein konstantes Fluidniveau in dem Reservoir (3) sichergestellt ist, und so, daß das Zweiphasenfluid gut vermischt bleibt.

2. Das System zur Abgabe von Fluid gemäß Anspruch 1, wobei die ersten und zweiten Pumpen (1,2) peristaltische Pumpen sind.

3. Das System zur Abgabe von Fluid gemäß Anspruch 1, und:
a) wobei das Fluid eine Suspension ist, oder
b) wobei das Fluid eine Emulsion ist.

4. Das System zur Abgabe von Fluid gemäß Anspruch 1, ferner mit einer Abgabekassette (3), die das Reservoir aufnimmt.

5. Ein Verfahren zum Minimieren der Trennung eines Zweiphasenfluids in einem Reservoir, mit Vorsehen einer Zuführquelle (4) des Fluids in Fluidverbindung mit dem Reservoir (3), Pumpen des Fluids von der Quelle (4) zu dem Reservoir (3) mit einer ersten Pumpe (1), Pumpen des Fluids von dem Reservoir (3) zu der Quelle (4) mit einer zweiten Pumpe (2), Bestimmen des Fluidniveaus in dem Reservoir, und, in Reaktion darauf, Aufrechterhalten der Zirkulation zwischen der Zuführquelle (4) und dem Reservoir (3) mit den ersten und zweiten Pumpen, derart, daß ein konstantes Fluidniveau in dem Reservoir (3) sichergestellt ist, und derart, daß das Zweiphasenfluid gut vermischt bleibt.

6. Das Verfahren gemäß Anspruch 5, und:
a) wobei das Fluid eine Suspension ist, oder
b) wobei das Fluid eine Emulsion ist.

## Revendications

1. Dispositif pour délivrer un fluide, destiné à délivrer un volume prédéterminé de fluide, du type comprenant :
un réservoir (3) ;
une source de fluide (4) comprenant un fluide diphasique ;
une première pompe (1) en communication fluide avec ladite source de fluide (4) et ledit réservoir (3), et agencée pour transférer ledit fluide diphasique dans ledit réservoir (3) ;
une seconde pompe (2) en communication fluide avec ledit réservoir (3) et ladite source de fluide (4), et agencée pour pomper ledit fluide diphasique depuis ledit réservoir (3) ;
un dispositif de détermination du niveau de fluide agencé pour déterminer le niveau de fluide dans ledit réservoir (3) ; et
un régulateur asservi audit dispositif de détermination du niveau de fluide pour commander la vitesse desdites première et seconde pompes (1, 2) en fonction du niveau de fluide dans ledit réservoir (3) et agencé de manière à maintenir la circulation entre ladite source de fluide (4) et ledit réservoir (3) en fonction dudit niveau de fluide déterminé, de manière à ce que le niveau de fluide soit maintenu constant dans ledit réservoir (3) et à ce que ledit fluide diphasique demeure bien mélangé.

2. Système délivrant un fluide selon la revendication 1, dans lequel lesdites première et seconde pompes (1, 2) sont des pompes péristaltiques.

3. Système délivrant un fluide selon la revendication 1, dans lequel :
a) ledit fluide est une suspension ; ou
b) ledit fluide est une émulsion.

4. Système délivrant le fluide selon la revendication 1, comprenant en outre une cartouche de distribution (3) dans laquelle est logé ledit réservoir.

5. Procédé de minimisation du phénomène de séparation d'un fluide diphasique dans un réservoir, comprenant la fourniture d'une source d'alimentation (4) en ledit fluide, en communication fluide avec ledit réservoir (3), le pompage dudit fluide depuis ladite source (4) vers ledit réservoir (3) au moyen d'une première pompe (1), le pompage dudit fluide depuis ledit réservoir (3) vers ladite source (4) au moyen d'une seconde pompe (2), la détermination du niveau de fluide dans ledit réservoir et, en réaction à ladite détermination, le maintien, au moyen desdites première et seconde pompes, de la circulation entre ladite source d'alimentation (4) et ledit réservoir (3) de manière à ce que le niveau de fluide soit maintenu constant dans ledit réservoir (3) et à ce que le dit fluide diphasique demeure bien mélangé.

6. Procédé selon la revendication 5, dans lequel :
a) ledit fluide est une suspension ; ou
b) ledit fluide est une émulsion.
